(19) Europäisches Patentamt
European Patent Office
Office européen des brevets

(11) **EP 3 037 684 B1**

(12) **FASCICULE DE BREVET EUROPEEN**

(45) Date de publication et mention
de la délivrance du brevet:
**06.02.2019 Bulletin 2019/06**

(51) Int Cl.:
*F16C 7/00* *(2006.01)* *F16C 11/04* *(2006.01)*
*B64C 1/06* *(2006.01)*

(21) Numéro de dépôt: **15201760.4**

(22) Date de dépôt: **21.12.2015**

(54) **CHAPE AVEC EMPOCHEMENT ET/OU RELIEF**

ABDECKUNG MIT VERTIEFUNGEN UND/ODER RELIEF

CAP WITH POCKET AND/OR RELIEF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 FR 1463215**

(43) Date de publication de la demande:
**29.06.2016 Bulletin 2016/26**

(73) Titulaires:
• **Airbus Operations**
**31060 Toulouse (FR)**
• **Airbus**
**31700 Blagnac (FR)**

(72) Inventeurs:
• **GALLIOT, André**
**31000 TOULOUSE (FR)**
• **JUILLEN, Lionel**
**31300 TOULOUSE (FR)**

(74) Mandataire: **Santarelli**
**49, avenue des Champs-Elysées**
**75008 Paris (FR)**

(56) Documents cités:
DE-A1- 1 575 489  DE-A1- 3 243 238
DE-U1- 8 629 001  DE-U1- 20 202 702

**Description**

DOMAINE TECHNIQUE

La présente invention concerne une pièce de liaison avec une aile comportant un alésage débouchant.
De manière générale, la présente invention concerne le domaine des liaisons ou attaches de différents éléments de structure entre eux impliquant une seule direction de fixation. Elle trouve son application, de manière non limitative, dans le domaine de la construction d'aéronefs.

ETAT DE LA TECHNIQUE

Classiquement, de nombreuses pièces de liaison sont mises en oeuvre dans l'aéronautique, et plus particulièrement dans la construction d'un aéronef, par exemple pour la liaison de structure, l'attache d'équipements, ou des moteurs, des trains d'atterrissage, ...
A titre d'exemple, on utilise de nombreuses chapes dans les aéronefs, ces chapes appartenant à des ferrures d'aéronef, des manilles ou encore des bielles utilisées couramment pour lier différents éléments de la structure de l'aéronef.
Bien que les modèles de chape puissent être variés, on retrouve typiquement dans ces chapes la présence d'une aile comportant un alésage débouchant, définissant une direction de fixation perpendiculaire à l'aile de la chape. La direction de fixation correspond par exemple à l'axe d'une vis ou tout autre type de fixations ("*fasteners*" en anglais) introduit dans l'alésage débouchant.
Compte tenu des sollicitations et des efforts repris par la chape, des concentrations de contrainte se produisent sur la zone périphérique autour de l'alésage débouchant.
Les contraintes sont maximales au niveau du bord de l'alésage débouchant et peuvent conduire à une fatigue prématurée de la chape.
En particulier, des risques de fissures ou criques sont observés au niveau du bord de l'alésage, ces fissures pouvant ensuite se propager dans la zone périphérique autour de l'alésage débouchant, dans les ligaments de la chape situés de part et d'autre de l'alésage débouchant.
On connaît des solutions décrites dans les documents FR 2 997 143 et DE 202 02 702 U1 visant à limiter les concentrations de contrainte à proximité immédiate d'un alésage débouchant d'une aile de chape.
Le document FR 2 997 143 prévoit ainsi de réaliser une lumière traversante dans l'aile de la chape. Cette lumière traversante est disposée suivant l'axe longitudinal médian de l'aile.
En outre, des orifices traversants sont ajoutés entre l'alésage et la lumière précitée, décalés de part et d'autre de l'axe longitudinal médian de l'aile.

RESUME DE L'INVENTION

La présente invention a pour but d'améliorer la structure d'une pièce de liaison pour renforcer sa résistance à l'égard de l'apparition et de la propagation de fissures dans la pièce.
A cet effet, la présente invention concerne une pièce de liaison avec une aile comportant un alésage débouchant, définissant une direction de fixation perpendiculaire à l'aile.
Selon l'invention, l'aile comporte au moins un empochement non débouchant configuré pour diminuer le gradient de contrainte dans une zone périphérique de l'alésage débouchant et éventuellement au moins un relief configuré pour diminuer le gradient de contrainte dans une zone périphérique de l'alésage débouchant, ledit empochement non débouchant formant une cavité dans l'épaisseur de l'aile et comportant un côté courbe à distance du bord périphérique de l'alésage débouchant.
En recherchant à diminuer le gradient de contrainte autour de l'alésage débouchant, par l'ajout d'un empochement non débouchant et éventuellement d'un relief, il est possible de diminuer le pic de contrainte observé, et ainsi de retarder l'amorçage de fissures au bord de l'alésage débouchant et la propagation de ces fissures dans le ligament.
La diminution du gradient de contrainte permet d'obtenir des valeurs de contrainte homogènes dans la zone périphérique de l'alésage, limitant ainsi la propagation des fissures dans la pièce de liaison.
On obtient ainsi un effet bénéfique à la fois sur le poids de la pièce de liaison, sa durée de vie et son dimensionnement en matière de tolérance au dommage.
Selon différentes caractéristiques et divers modes de réalisation de l'invention, qui peuvent être pris isolément ou en combinaison :

- l'empochement non débouchant forme une cavité dans la surface de l'aile, la cavité ayant un fond s'étendant dans un plan sensiblement parallèle à un plan de l'aile ;
- l'alésage débouchant est disposé dans une portion d'extrémité de l'aile et centré sur l'intersection d'un axe longitudinal médian de l'aile et d'un axe transversal et ledit au moins un empochement non débouchant et ledit éventuel au moins un relief sont localisés uniquement sur une portion de l'aile s'étendant d'un même côté dudit axe transversal, opposé à une extrémité libre de l'aile ;
- ledit au moins un empochement non débouchant s'étend de part et d'autre de l'axe longitudinal médian ;
- ledit au moins un empochement non débouchant et ledit éventuel au moins un relief ont un côté s'étendant parallèlement à un bord longitudinal de ladite aile ;
- ledit côté courbe dudit au moins un empochement non débouchant s'étend suivant un secteur angulaire compris entre 30° et 180°.

- ledit côté courbe dudit au moins un empochement non débouchant s'étend suivant une portion d'arc de cercle concentrique avec ledit alésage débouchant ;
- ledit au moins un relief a une partie de nervure s'étendant sensiblement parallèlement à un bord longitudinal de ladite aile et une partie d'extrémité formant un angle compris entre 0 et 90° avec ladite partie de nervure ;
- ledit au moins un empochement non débouchant et ledit éventuel au moins un relief sont de forme symétrique par rapport à un axe longitudinal médian de ladite aile ;
- la pièce de liaison constitue une chape d'une ferrure d'aéronef.

BREVE DESCRIPTION DES DESSINS

D'autres particularités et avantages de l'invention apparaîtront encore dans la description ci-après.

Aux dessins annexés, donnés à titre d'exemples non limitatifs :

- la figure 1 est un schéma explicatif de la répartition des contraintes dans une pièce de liaison;
- la figure 2 est une vue de dessus schématique d'une pièce de liaison selon un premier mode de réalisation de l'invention ;
- la figure 3 est une vue en coupe selon la ligne III-III à la figure 2 ; et
- la figure 4 est une vue de dessus schématique d'une pièce de liaison comprenant une chape selon un second mode de réalisation de l'invention.

DESCRIPTION DETAILLEE

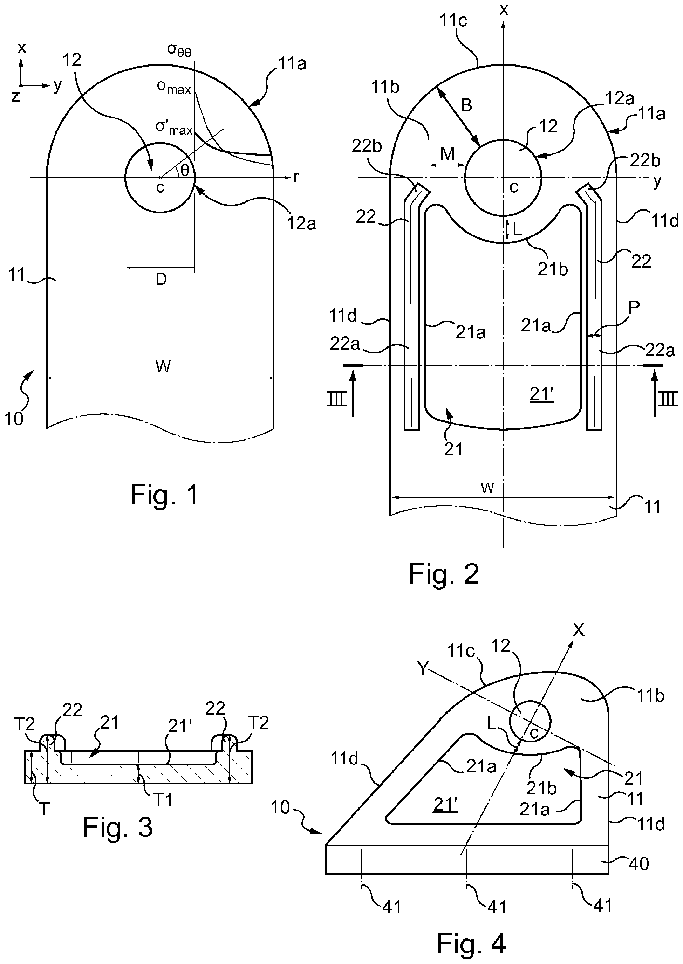

On va rappeler tout d'abord, en référence à la figure 1, la répartition des contraintes dans une pièce de liaison avec une aile comportant un alésage débouchant.

Dans la suite de la description, le terme "comprenant" n'exclut pas d'autres éléments ou étapes et le terme "un" n'exclut pas le pluriel.

Comme bien illustré à la figure 1, la pièce de liaison 10 comporte une aile 11 comportant un alésage débouchant 12.

Ce type de pièces de liaison est utilisé pour la liaison de différents éléments de structure les uns aux autres, requérant un seul point de liaison, réalisée par une seule fixation (non représentée) suivant l'axe de l'alésage débouchant 12.

Du fait de la présence de l'alésage débouchant 12 dans la pièce de liaison 10, la direction de fixation Z est définie perpendiculairement à l'aile 11 qui s'étend dans un plan X, Y.

On retrouve ce type de pièce de liaison dans différents types de liaison utilisés notamment en aéronautique.

Les pièces de liaison, réalisant l'attache de différentes structures d'un aéronef, et également appelées ferrures (*fittings* en anglais), comportent une chape avec une ou plusieurs ailes munies chacune d'un alésage débouchant pour coopérer avec une fixation.

On estime ainsi que, dans un aéronef, plus d'un millier de chapes, correspondant à des points de liaison élémentaires, sont mises en oeuvre en différents points de la structure.

Par conséquent, l'amélioration de leurs performances et durée de vie, ainsi que tout gain de poids, même minime, représentent un enjeu important.

On peut distinguer différents types de chape couramment utilisés dans les aéronefs : tout d'abord, des chapes formées d'une pièce isolée, ou solidaires par une de leur extrémité distante à leur support.

Ce type de chapes se retrouve notamment à l'extrémité des bielles de grandes longueurs, ou encore dans une manille.

D'autres types de chape sont solidarisés par insertion dans des panneaux nervurés, ou mettent en oeuvre une ou plusieurs semelles de bord pouvant être fixées sur des parties de structure, au moyen de vis d'assemblage.

Le schéma illustratif de la figure 1 s'applique à n'importe quel type de chape dès lors qu'un alésage débouchant 12 est présent dans une aile 11, et que la fonction de liaison est assurée au moyen d'une fixation (vis, axe, boulon) unique.

Une concentration des contraintes est observée en utilisation dans la zone périphérique de l'alésage débouchant 12.

Un pic de concentration est observé au niveau du bord périphérique 12a de l'alésage débouchant 12.

On a illustré ainsi sur une courbe en fonction de la distance r à partir du centre c de l'alésage débouchant 12, la valeur de la contrainte tangentielle $\sigma_{\theta\theta}$ observée dans l'aile 11, et plus particulièrement dans la zone périphérique autour de l'alésage débouchant 12.

A la figure 1, la courbe en trait fin illustre à titre d'exemple un gradient de contrainte tangentielle observé dans la zone périphérique de l'alésage débouchant 12 en fonction de la distance r du centre c de l'alésage débouchant 12a.

Ainsi, la contrainte tangentielle maximale $\sigma_{max}$ est localisée au niveau du bord 12a de l'alésage débouchant 12, c'est-à-dire à une distance D/2 du centre c de l'alésage débouchant 12, où D est le diamètre de l'alésage débouchant 12.

La valeur de la contrainte tangentielle $\sigma_{\theta\theta}$ varie fortement entre le bord périphérique 12a de l'alésage débouchant 12 et un bord périphérique 11a de l'aile 11 de la pièce de liaison 10.

Du fait de ce niveau de contrainte important, des fissures peuvent apparaitre au niveau du bord périphérique 12a de l'alésage débouchant 12, susceptibles de se propager dans l'aile 11, selon la direction d'un rayon de l'alésage débouchant 12.

On va décrire à présent en référence aux figures 2 et 3 un premier mode de réalisation d'une pièce de liaison 10 permettant de diminuer les temps d'apparition et de propagation de fissures.

L'aile 11 comporte au moins un empochement non débouchant 21 (en anglais "*pocket*") ou au moins un relief 22, configuré pour diminuer le gradient de contrainte, et ainsi la valeur de la contrainte tangentielle maximale $\sigma_{max}$, dans la zone périphérique de l'alésage débouchant 12.

Dans le mode de réalisation illustré à la figure 2, et de manière non limitative, l'aile 11 comporte un empochement non débouchant 21 et deux reliefs 22.

L'empochement non débouchant 21 et les reliefs 22 sont configurés pour diminuer le gradient de contrainte comme illustré sur la courbe de la figure 1, en trait fort.

On observe ainsi un gradient de contrainte présentant un pic de contrainte tangentielle $\sigma'_{max}$ plus faible que le pic de contrainte tangentielle $\sigma_{max}$ observé en l'absence d'un empochement et/ou d'un relief. En outre, la valeur de la contrainte tangentielle $\sigma_{\theta\theta}$ est plus homogène dans la zone périphérique de l'alésage débouchant 12.

Cette diminution du gradient de contrainte a ainsi pour effet d'augmenter la durée de vie avant apparition de fissures ou de criques au niveau du bord périphérique 12a de l'alésage débouchant 12 et de diminuer la vitesse de propagation des fissures dans la zone périphérique de l'alésage débouchant 12.

Le positionnement de l'empochement non débouchant 21 et des reliefs 22, ainsi que leur dimensionnement, sont configurés pour obtenir une diminution du gradient de contrainte, et ainsi de la valeur de la contrainte tangentielle maximale $\sigma_{max}$.

Ainsi, le dimensionnement de la pièce de liaison 10 prend en compte non seulement la largeur W de l'aile 11, le diamètre D de l'alésage 12 et l'épaisseur T de l'aile 11, mais également l'épaisseur T1 au niveau de l'empochement non débouchant 21, inférieure à l'épaisseur T de l'aile 11, et l'épaisseur T2 des reliefs 22, supérieure à l'épaisseur T de l'aile 11. Le choix de ces paramètres permet de modifier le comportement mécanique de la pièce de liaison 10 et de diminuer ainsi la valeur des contraintes dans la zone périphérique de l'alésage débouchant 12, qui correspond à la zone la plus sollicitée de la pièce de liaison 10 en utilisation.

Plus précisément à la figure 2, dans ce premier mode de réalisation, l'alésage débouchant 12 est disposé dans une portion d'extrémité 11b de l'aile 11.

L'alésage débouchant 12 est centré sur l'intersection c d'un axe longitudinal médian X de l'aile 11 et d'un axe transversal Y, perpendiculaire à l'axe longitudinal médian X.

Le centre c de l'alésage débouchant 12 est confondu avec la direction de fixation Z perpendiculaire à l'aile 11, correspondant à la direction d'une fixation (non représentée).

L'empochement non débouchant 21 et les reliefs 22 sont localisés uniquement sur une portion de l'aile 11 qui s'étend d'un même côté de l'axe transversal Y, opposé à une extrémité libre 11c de l'aile 11.

L'empochement non débouchant 21 s'étend de part et d'autre de l'axe longitudinal médian X.

L'empochement non débouchant 21 forme ainsi une cavité dans la surface de l'aile 11, avec un fond 21' s'étendant dans un plan sensiblement parallèle au plan X, Y de l'aile 11 de la pièce de liaison 10.

On notera qu'un empochement non débouchant 21 peut également être disposé sur chaque face de l'aile 11, préférablement de manière symétrique par rapport au plan X, Y de l'aile 11 de la pièce de liaison 10.

Comme bien illustré à la figure 3, l'empochement non débouchant 21 forme ainsi une cavité dans l'épaisseur T de l'aile 11 de telle sorte que l'épaisseur T1 au niveau de l'empochement non débouchant 21 est inférieure à l'épaisseur T de l'aile 11.

En d'autres termes, l'empochement non débouchant 21 correspond à une zone de moindre épaisseur et non débouchante dans l'aile 11.

Les reliefs 22 sont, dans ce mode de réalisation, disposés de part et d'autre de l'empochement non débouchant 21, entre l'empochement non débouchant 21 et un bord longitudinal 11d de l'aile 11.

Comme bien illustré à la figure 3, les reliefs 22 sont ici constitués respectivement d'une nervure dont l'épaisseur T2 est supérieure à l'épaisseur T de l'aile 11.

Par ailleurs, l'empochement non débouchant 21 et les reliefs 22 ont chacun un côté qui s'étend parallèlement au bord longitudinal 11d de l'aile 11.

Plus précisément, dans le mode de réalisation illustré à la figure 2, l'empochement non débouchant 21 comporte deux côtés longitudinaux 21a s'étendant sensiblement parallèlement à l'axe longitudinal médian X. Les deux côtés longitudinaux 21a de l'empochement non débouchant 21 sont parallèles respectivement à deux bords longitudinaux 11d de l'aile 11.

Dans ce mode de réalisation, la distance entre chaque côté longitudinal 21a de l'empochement non débouchant 21 et le bord longitudinal 11d de l'aile 11 est sensiblement identique.

Par ailleurs, les deux reliefs 22 ont chacun une partie de nervure 22a dont les côtés s'étendent parallèlement aux bords longitudinaux 11d de l'aile 11 et ici, parallèlement à l'axe longitudinal médian X de l'aile 11.

Ici, chaque partie de nervure 22a est rectiligne et présente une largeur P selon la direction transversale Y de l'aile 11.

Dans ce mode de réalisation, la distance entre chaque partie de nervure 22a et le bord longitudinal 11d de l'aile 11 est sensiblement identique.

Chaque relief 22 a en outre ici, et de manière non limitative, une partie d'extrémité 22b formant un angle non nul par rapport à la partie de nervure 22a et orientée en direction de l'alésage débouchant 12 dans l'aile 11.

L'orientation de la partie d'extrémité 22b de chaque relief 22 correspond à une orientation dans le sens de la contrainte principale maximum autour de l'alésage débouchant 12. Les reliefs 22 jouent ainsi un rôle de raidisseur, améliorant la résistance mécanique de l'aile 11.

Plus généralement, la partie d'extrémité 22b peut former un angle compris entre 0 et 90° avec la partie de nervure 22a, de telle sorte que le relief 22 peut être rectiligne ou posséder une partie d'extrémité 22b inclinée.

Par ailleurs, l'empochement non débouchant 21 comporte un côté courbe 21b, s'étendant ici sur une portion d'arc de cercle concentrique avec l'alésage débouchant 12.

Le côté courbe 21b de l'empochement non débouchant 21 s'étend suivant un secteur angulaire d'au moins 30°, et plus généralement qui peut être compris entre 30° et 180°.

Dans le mode de réalisation illustré à la figure 2, le secteur angulaire du côté courbe 21b de l'empochement non débouchant 21 s'étend à titre d'exemple sensiblement sur 120°.

On notera que le secteur angulaire varie en fonction du ratio W/D, où W correspond à la largeur de l'aile 11 et D le diamètre de l'alésage débouchant 12.

D'une manière générale, lors du dimensionnement de la pièce de liaison 10 décrite précédemment, la section transversale est maintenue sensiblement constante dans l'aile 11 quel que soit le plan transversal considéré.

Ainsi, au niveau de l'axe transversal Y, passant au centre c de l'alésage débouchant 12, la section S de l'aile 11 est égale à :

$$S = (W-D) \times T$$

La section de l'aile 11 prise selon d'autres plans transversaux parallèles à l'axe transversal Y reste sensiblement constante à cette valeur de section S.

Ainsi, comme illustré à la figure 3, le dimensionnement des reliefs 22, de l'empochement non débouchant 21, y compris les différentes épaisseurs T1, T2, T de l'aile 11, sont choisis de manière à satisfaire le critère de maintien de la valeur de la section S.

Outre ces paramètres, le dimensionnement de la pièce de liaison 10 prend également en compte la distance L séparant le côté courbe 21b de l'alésage débouchant 12 et la distance entre chaque côté longitudinal 21a de l'empochement non débouchant 21 et le bord longitudinal 11d correspondant de l'aile 11.

On notera également que, de préférence, le positionnement de l'empochement non débouchant 21 et des reliefs 22 est symétrique par rapport à l'axe longitudinal médian X de l'aile 11.

En outre, l'empochement non débouchant 21 et les reliefs 22 sont ici de forme symétrique par rapport à l'axe longitudinal médian X de l'aile 11.

Par ailleurs, la zone périphérique autour de l'alésage débouchant 12 qui est perturbée par la charge introduite au niveau de l'axe de fixation s'étend dans une portion de l'aile 11 située à une distance maximale du centre c de l'alésage débouchant 12 égale à 1,57 x W où W est la largeur de l'aile 11 (voir la définition de la taille de la zone périphérique soumise à des contraintes par THEOCARIS dans "the stress distribution in strip loaded in tension by means of a central pin", J. Applied Meck 85-90-1940).

Il est ainsi intéressant de prévoir un ou plusieurs empochements non débouchants 21 et un ou plusieurs reliefs 22 dans une zone de l'aile 11 ne s'étendant pas au-delà de cette distance maximale de 1,57 x W.

La conception d'une telle pièce de liaison 10 prendra en compte l'ensemble des paramètres décrits précédemment.

Elle prendra en compte également la valeur de la plus courte distance L entre l'empochement non débouchant 21 et l'alésage débouchant 12, qui correspond ici à la distance L entre le côté courbe 21b de l'empochement non débouchant 21 et le bord périphérique 12a de l'alésage débouchant 12.

En outre, le dimensionnement de la pièce de liaison 10 prendra en compte la largeur P de la partie de nervure 22a des reliefs 22 et la distance la plus courte M entre les reliefs 22 et l'alésage débouchant 12.

En particulier, les distances les plus courtes L, M telles que définies ci-dessus peuvent être dimensionnées en fonction de la distance la plus courte B existant entre l'alésage débouchant 12 et le bord périphérique 11a de l'aile 11.

On notera que dans le mode de réalisation illustré à la figure 2, l'extrémité libre 11c de l'aile 11 présente une forme semi-circulaire autour de l'alésage débouchant 12 : le centre de l'extrémité libre 11c peut être avantageusement décalé (vers le haut sur l'exemple illustré à la figure 2) par rapport au centre c de l'alésage débouchant 12, ce léger décalage ayant pour effet de diminuer le pic de contrainte $\sigma_{max}$.

Ici, la distance la plus courte B existant entre l'alésage débouchant 12 et le bord périphérique 11a de l'aile correspond à la valeur de la largeur du ligament (W-D)/2 sur l'axe transversal y.

La distance la plus courte M entre les reliefs 22 et l'alésage débouchant 12 est avantageusement inférieure à la distance la plus courte B entre l'alésage débouchant 12 et le bord périphérique 11a de l'aile 11 et supérieure à un quart de la distance la plus courte B entre l'alésage débouchant 12 et le bord périphérique 11a de l'aile 11.

De même, la distance la plus courte L entre l'empochement non débouchant 21 et l'alésage débouchant 12 est avantageusement supérieure ou égale à un tiers du rayon D/2 de l'alésage débouchant 12.

En outre, la distance entre les bords longitudinaux 11d de l'aile 11 et les côtés longitudinaux 21a de l'empochement non débouchant 21 et la distance entre les bords longitudinaux 11d de l'aile 11 et la partie de nervure 22a des reliefs 22 peuvent également être variables.

Par ailleurs, la réalisation d'empochements non débouchants 21 dans la pièce de liaison 10 permet de diminuer le poids de celle-ci, ce qui présente un gain non négligeable dans le cadre d'une application aéronautique où plusieurs centaines ou milliers de chapes sont utilisées.

En particulier, on notera que l'ajout de reliefs 22 tel que prévu dans le mode de réalisation à la figure 2 permet de diminuer davantage l'épaisseur T1 de l'aile 11 au niveau de l'empochement non débouchant 21, dans la mesure où la présence des reliefs 22 a un effet plus important sur la diminution de la valeur de la contrainte tangentielle maximale $\sigma_{max}$ que la présence de l'empochement non débouchant 21. Dans un tel cas, le poids de la pièce de liaison 10 peut encore être diminué.

L'ensemble des paramètres décrits précédemment est ainsi pris en compte pour le dimensionnement de la pièce de liaison 10 illustrée aux figures 2 et 3.

A titre d'exemple, une telle pièce de liaison peut être une chape d'une ferrure d'aéronef, pouvant représenter jusqu'à 80% des cas de chapes utilisées dans un aéronef.

On a illustré par ailleurs à la figure 4 un second mode de réalisation d'une pièce de liaison 10.

Cette pièce de liaison 10 est similaire à l'exemple décrit précédemment en référence à la figure 2, dès lors qu'elle met également en oeuvre une aile 11 comportant un alésage débouchant 12 définissant une direction de fixation perpendiculaire à l'aile 11.

Les caractéristiques analogues entre la figure 4 et la figure 2 portent ainsi les mêmes références numériques et n'ont pas besoin d'être redécrites en détail ici.

La pièce de liaison 10 comporte ici en outre une semelle de fixation 40 permettant le montage de la pièce de liaison 10 par exemple par boulonnage (schématisé par des axes (ou vis) 41), à une structure telle qu'une porte d'aéronef.

Dans ce mode de réalisation, l'aile 11 comporte un empochement non débouchant 21 configuré pour diminuer le gradient de contrainte dans la zone périphérique de l'alésage débouchant 12.

A cet effet, on notera que, comme dans le mode de réalisation à la figure 2, l'empochement non débouchant 21 est localisé uniquement sur une portion de l'aile 11 s'étendant d'un même côté de l'axe transversal Y, opposé à une extrémité libre 11c de l'aile 11.

L'empochement non débouchant 21 s'étend en outre de part et d'autre de l'axe longitudinal médian X de l'aile 11.

Il comporte deux côtés 21a parallèles chacun à un bord longitudinal 11d de l'aile 11.

L'empochement non débouchant 21 comporte également un côté courbe 21b s'étendant en vis-à-vis de l'alésage débouchant 12.

Ici, le rayon du côté courbe 21b de l'empochement non débouchant 21 est supérieur au rayon D/2 de l'alésage débouchant 12, augmenté de la plus courte distance L entre l'empochement non débouchant 21 et l'alésage débouchant 12.

Ainsi, dans ce mode de réalisation, le côté courbe 21b de l'empochement non débouchant 21 ne s'étend pas suivant une portion d'arc de cercle concentrique avec l'alésage débouchant 12.

Bien entendu, les exemples décrits précédemment en référence aux figures 2 à 4 ne sont donnés qu'à titre purement illustratif.

Ainsi, le nombre d'empochements non débouchants 21 et de reliefs 22 peut être différent.

Par ailleurs, l'aile 11 de la pièce de liaison 10 peut ne comporter qu'un ou plusieurs reliefs 22.

De manière générale, la pièce de liaison 10 est réalisée en métal, et par exemple en acier, en alliage d'aluminium, en alliage de titane ou encore en alliage de nickel.

Les pièces de liaison peuvent en outre être réalisées par usinage mais également par différentes techniques de fabrication incluant le moulage, le matriçage, la fabrication par dépôt de couches successives (connu sous la terminologie anglo-saxonne *"Additive layer manufacturing"*) ou encore par soudage par friction (ou *"linear friction welding"* en terminologie anglo-saxonne).

Il est possible d'utiliser avantageusement des matériaux différents lors de la fabrication de l'aile 11 de la pièce de liaison 10, et par exemple des matériaux différents pour fabriquer les reliefs 22.

On notera par ailleurs dans le mode de réalisation illustré à la figure 4 que le positionnement d'empochements non débouchants 21 et éventuellement de reliefs pourra prendre en compte également la présence de la semelle de fixation 40 et des contraintes de fixation de la pièce de liaison 10 au niveau de la semelle de fixation 40.

Bien entendu, de nombreuses modifications peuvent être apportées aux exemples de réalisation décrits précédemment sans sortir du cadre de l'invention.

## Revendications

1. Pièce de liaison avec une aile (11) comportant un alésage débouchant (12), définissant une direction de fixation (Z) perpendiculaire à ladite aile (11), où l'aile (11) comporte, dans le matériau de l'aile, au moins un empochement non débouchant (21) configuré pour diminuer le gradient de contrainte dans une zone périphérique dudit alésage débouchant (12) et éventuellement au moins un relief (22) configuré pour diminuer le gradient de contrainte dans une zone périphérique dudit alésage débouchant (12), ledit empochement non débouchant (21) formant une cavité dans l'épaisseur de l'aile (11) et comportant un côté courbe (21b), ledit empochement non débouchant (21) et ledit côté courbe (21b) étant situés à distance (L) du bord périphérique (12a) de l'alésage débouchant (12).

2. Pièce de liaison conforme à la revendication 1, **caractérisée en ce que** l'empochement non débouchant (21) forme une cavité dans la surface de l'aile (11), ladite cavité ayant un fond (21') s'étendant dans un plan sensiblement parallèle à un plan (X, Y) de l'aile (11).

3. Pièce de liaison conforme à l'une des revendications 1 ou 2, ledit alésage débouchant (12) étant disposé dans une portion d'extrémité (11b) de ladite aile (11) et centré sur l'intersection (c) d'un axe longitudinal médian (X) de ladite aile (11) et d'un axe transversal (Y), **caractérisée en ce que** ledit au moins un empochement non débouchant (21) et ledit éventuel au moins un relief (22) sont localisés uniquement sur une portion de l'aile (11) s'étendant d'un même côté dudit axe transversal (Y), opposé à une extrémité libre (11c) de l'aile (11).

4. Pièce de liaison conforme à la revendication 3, **caractérisée en ce que** ledit au moins un empochement non débouchant (21) s'étend de part et d'autre de l'axe longitudinal médian (X).

5. Pièce de liaison conforme à l'une des revendications 1 à 4, **caractérisée en ce que** ledit au moins un empochement non débouchant (21) et ledit éventuel au moins un relief (22) ont un côté (21a, 22a) s'étendant parallèlement à un bord longitudinal (11d) de ladite aile (11).

6. Pièce de liaison conforme à l'une des revendications 1 à 5, **caractérisée en ce que** ledit côté courbe (21b) dudit au moins un empochement non débouchant (21) s'étend suivant un secteur angulaire compris entre 30° et 180°.

7. Pièce de liaison conforme à la revendication 6, **caractérisée en ce que** ledit côté courbe (21b) dudit au moins un empochement non débouchant (21) s'étend suivant une portion d'arc de cercle concentrique avec ledit alésage débouchant (12).

8. Pièce de liaison conforme à l'une des revendications 1 à 7, **caractérisée en ce que** ledit au moins un relief (22) a une partie de nervure (22a) s'étendant sensiblement parallèlement à un bord longitudinal (11d) de ladite aile (11) et une partie d'extrémité (22b) formant un angle compris entre 0 et 90° avec ladite partie de nervure (22a).

9. Pièce de liaison conforme à l'une des revendications 1 à 8, **caractérisée en ce que** ledit au moins un empochement non débouchant (21) et ledit éventuel au moins un relief (22) sont de forme symétrique par rapport à un axe longitudinal médian (X) de ladite aile (11).

10. Pièce de liaison conforme à l'une des revendications 1 à 9, **caractérisée en ce qu'**elle constitue une chape d'une ferrure d'aéronef.

**Patentansprüche**

1. Verbindungsstück mit einem Flügel (11), der eine durchgehende Bohrung (12) aufweist, die eine Befestigungsrichtung (Z) senkrecht zu dem Flügel (11) definiert, wobei der Flügel (11) in dem Material des Flügels mindestens eine nicht durchgehende Vertiefung (21), die ausgelegt ist, den Spannungsgradienten in einem Randbereich der durchgehenden Bohrung (12) zu verringern, und eventuell mindestens ein Relief (22), das ausgelegt ist, den Spannungsgradienten in einem Randbereich der durchgehenden Bohrung (12) zu verringern, aufweist, wobei die nicht durchgehende Vertiefung (21) einen Hohlraum in der Dicke des Flügels (11) bildet und eine Krümmungsseite (21b) umfasst, wobei sich die nicht durchgehende Vertiefung (21) und die Krümmungsseite (21b) in einem Abstand (L) von dem Umfangsrand (12a) der durchgehenden Bohrung (12) befinden.

2. Verbindungsstück nach Anspruch 1, **dadurch gekennzeichnet, dass** die nicht durchgehende Vertiefung (21) einen Hohlraum in der Fläche des Flügels (11) bildet, wobei der Hohlraum einen Boden (21') aufweist, der sich in einer Ebene erstreckt, die im Wesentlichen parallel zu einer Ebene (X, Y) des Flügels (11) verläuft.

3. Verbindungsstück nach einem der Ansprüche 1 oder 2, wobei die durchgehende Bohrung (12) in einem Endabschnitt (11b) des Flügels (11) angeordnet ist und auf dem Schnittpunkt (c) einer Mittellängsachse (X) des Flügels (11) und einer Querachse (Y) zentriert ist, **dadurch gekennzeichnet, dass** sich die mindestens eine nicht durchgehende Vertiefung (21) und das eventuell mindestens eine Relief (22) nur auf einem Abschnitt des Flügels (11) befinden, der sich auf einer selben Seite der Querachse (Y) erstreckt, die einem freien Ende (11c) des Flügels (11) gegenüberliegt.

4. Verbindungsstück nach Anspruch 3, **dadurch gekennzeichnet, dass** sich die mindestens eine nicht durchgehende Vertiefung (21) beiderseits der Mittellängsachse (X) erstreckt.

5. Verbindungsstück nach einem der Ansprüche 1 bis 4, **dadurch gekennzeichnet, dass** die mindestens eine nicht durchgehende Vertiefung (21) und das eventuell mindestens eine Relief (22) eine Seite (21a, 22a) aufweisen, die sich parallel zu einem Längsrand (11d) des Flügels (11) erstreckt.

6. Verbindungsstück nach einem der Ansprüche 1 bis 5, **dadurch gekennzeichnet, dass** sich die Krümmungsseite (21b) der mindestens einen nicht durchgehenden Vertiefung (21) in einem Winkelbereich zwischen 30° und 180° erstreckt.

7. Verbindungsstück nach Anspruch 6, **dadurch gekennzeichnet, dass** sich die Krümmungsseite (21b) der mindestens einen nicht durchgehenden Vertiefung (21) in einem Kreisbogenabschnitt erstreckt, der mit der durchgehenden Bohrung (12) konzentrisch ist.

8. Verbindungsstück nach einem der Ansprüche 1 bis 7, **dadurch gekennzeichnet, dass** das mindestens eine Relief (22) einen Rippenbereich (22a), der sich im Wesentlichen parallel zu einem Längsrand (11d) des Flügels (11) erstreckt, und einen Endbereich (22b), der einen Winkel zwischen 0 und 90° mit dem Rippenbereich (22a) bildet, aufweist.

9. Verbindungsstück nach einem der Ansprüche 1 bis 8, **dadurch gekennzeichnet, dass** die mindestens eine nicht durchgehende Vertiefung (21) und das eventuell mindestens eine Relief (22) eine symmetrische Form bezogen auf eine Mittellängsachse (X) des Flügels (11) aufweisen.

10. Verbindungsstück nach einem der Ansprüche 1 bis 9, **dadurch gekennzeichnet, dass** es einen Gabelkopf eines Flugzeugbeschlags bildet.

**Claims**

1. Joining part with a wing (11) comprising a through bore (12) defining a fastening direction (Z) perpendicular to said wing (11), where the wing (11) comprises, in the material of the wing, at least one non-through pocket (21) configured to reduce the stress gradient in a peripheral zone of said through bore (12) and optionally at least one relief (22) configured to reduce the stress gradient in a peripheral zone of said through bore (12), said non-through pocket (21) forming a cavity in the thickness of the wing (11) and comprising a curved side (21b), said non-through pocket (21) and said curved side (21b) being located at a distance (L) from the peripheral edge (12a) of the through bore (12).

2. Joining part according to claim 1, **characterized in that** the non-through pocket (21) forms a cavity in the surface of the wing (11), said cavity having a base (21') extending in a plane substantially parallel to a plane (X, Y) of the wing (11).

3. Joining part according to one of claims 1 or 2, said through bore (12) being arranged in an end portion (11b) of said wing (11) and centered on the intersection (c) of a longitudinal median axis (X) of said wing (11) and of a transverse axis (Y), **characterized in that** said at least one non-through pocket (21) and said optionally at least one relief (22) are located solely on a portion of the wing (11) extending on the same side of said transverse axis (Y), opposite a free end (11c) of the wing (11).

4. Joining part according to claim 3, **characterized in that** said at least one non-through pocket (21) extends on either side of the longitudinal median axis (X).

5. Joining part according to one of claims 1 to 4, **characterized in that** said at least one non-through pocket (21) and said optionally at least one relief (22) have a side (21a, 22a) extending parallel to a longitudinal edge (11d) of said wing (11) .

6. Joining part according to one of claims 1 to 5, **characterized in that** said curved side (21b) of said at least one non-through pocket (21) extends over an angular sector of between 30° and 180°.

7. Joining part according to claim 6, **characterized in that** said curved side (21b) of said at least one non-through pocket (21) extends over a portion of an arc of a circle concentric with said through bore (12).

8. Joining part according to one of claims 1 to 7, **characterized in that** said at least one relief (22) has a rib part (22a) extending substantially parallel to a longitudinal edge (11d) of said wing (11) and an end part (22b) forming an angle of between 0 and 90° with said rib part (22a).

9. Joining part according to one of claims 1 to 8, **characterized in that** said at least one non-through pocket (21) and said optionally at least one relief (22) are symmetrical relative to a longitudinal median axis (X) of said wing (11).

10. Joining part according to one of claims 1 to 9, **characterized in that** it constitutes a lug of an aircraft fitting.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2997143

- DE 20202702 U1

**Littérature non-brevet citée dans la description**

- **THEOCARIS.** the stress distribution in strip loaded in tension by means of a central pin. *J. Applied Meck,* 1940, 85-90